Europäisches Patentamt

European Patent Office

Office européen des brevets

(11) Veröffentlichungsnummer: **0 081 708**
**B1**

# EUROPÄISCHE PATENTSCHRIFT

(45) Veröffentlichungstag der Patentschrift:
02.10.85

(21) Anmeldenummer: **82110856.0**

(22) Anmeldetag: **24.11.82**

(51) Int. Cl.⁴: **C 08 G 65/46**

(54) Verfahren zur Entfernung des Katalysators aus Polyphenylenethern.

(30) Priorität: **05.12.81 DE 3148150**

(43) Veröffentlichungstag der Anmeldung:
**22.06.83 Patentblatt 83/25**

(45) Bekanntmachung des Hinweises auf die Patenterteilung:
**02.10.85 Patentblatt 85/40**

(84) Benannte Vertragsstaaten:
**BE DE FR GB NL**

(56) Entgegenhaltungen:
**DE - A - 2 755 937**
**GB - A - 982 471**
**US - A - 4 263 426**

(73) Patentinhaber: **BASF Aktiengesellschaft,
Carl-Bosch-Strasse 38, D-6700 Ludwigshafen (DE)**

(72) Erfinder: **Schuster, Hans H., Dr., Luitpoldstrasse 166,
D-6700 Ludwigshafen (DE)**
Erfinder: **Hambrecht, Juergen, Dr., Werderstrasse 30,
D-6900 Heidelberg (DE)**
Erfinder: **Naarmann, Herbert, Dr., Haardtblick 15,
D-6719 Wattenheim (DE)**
Erfinder: **Muench, Volker, Dr., Luitpoldstrasse 114,
D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Entfernung des Katalysators bei der Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplung mit Sauerstoff oder sauerstoffhaltigen Gasmischungen bei Temperaturen zwischen 15 und 50°C in Anwesenheit eines Katalysatorkomplexes aus einem Kupfersalz und einem organischen Amin in Gegenwart eines Lösungsmittels im Bereich von 1 : 1 bis 20 : 1 Gewichtsteilen, bezogen auf das Monomere Phenol, und Inaktivierung des kupferhaltigen Katalysatorkomplexes bei Ende der oxidativen Kupplungsreaktion durch in Kontakt bringen mit chelatkomplexbildenden Substanzen in Gegenwart eines wäßrigen Mediums sowie Abtrennung der in der wäßrigen Phase löslichen Metallchelatkomplexe und anderer wasserlöslicher Bestandteile.

Polyphenylenether und Verfahren zu ihrer Herstellung sind allgemein bekannt und vielfach beschrieben, wie beispielsweise in US-A-3 306 874, 3 306 875, 3 639 656, 3 642 699 und 3 661 848. Die zur Herstellung der Polyphenylenether am häufigsten angewendeten Verfahren betreffen die Selbstkondensation einwertiger Phenole durch Einwirkung von Sauerstoff in Gegenwart von Katalysatoren.

Als Katalysatoren werden bevorzugt Metall-Amin-Komplexe, insbesondere Cu-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wäßrigen Lösungen von anorganischen oder organischen Säuren, wie es z. B. in der DE-A-2 105 372 im Gegenstromextraktionsverfahren vorgenommen wird. Verwendet werden auch Polycarbonsäuren und/oder Polyaminocarbonsäuren (siehe DE-A-2 364 319) oder andere Chelatisierungsmittel, wie Nitrilotriessigsäure und ihre Natriumsalze oder Ethylendiamintetraessigsäure und ihre Natriumsalze (siehe DE-A-2 532 477) letztere auch in Kombination mit quarternären Ammoniumsalzen (siehe US-A-4 026 870) bzw. Phosphoniumsalzen (DE-A-3 140 026).

Beschrieben wird auch die Katalysatorabtrennung mit Hilfe komplexbildender Mittel aus der Gruppe des Bisguanids (siehe DE-A-2 460 325), bzw. der Gruppe der Organophosphorsäuren und der Mercaptoverbindungen (DE-A-3 140 025). Neben dem Abbrechen der oxidativen Selbstkondensation hat die Zugabe des komplexbildenden Agens auch die möglichst vollständige Entfernung des Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen. Alle bisherigen Maßnahmen zur Entfernung von Katalysatorresten haben den Nachteil, daß zu einer vollständigen Entfernung (Restmenge des Metallions kleiner als 10 ppm) mehrfache Extraktionsschritte mit z. T. komplizierten Trennverfahren angewendet werden müssen. Häufig wird dabei der Charakter des Polyphenylethers verändert.

Der Erfindung lag deshalb die Aufgabe zugrunde, ein einfaches und hochwirksames Verfahren zur Abtrennung der Katalysatorreste aus den bei der Selbstkondensation einwertiger Phenole entstandenen Reaktionsprodukten zu entwickeln.

Diese Aufgabe wird erfindungsgemäß dadurch gelöst, daß in der Reaktionsmischung enthaltenes Wasser durch thermische Trennverfahren abgetrennt und die aus der Reaktionsmischung sich ausscheidenden festen Anteile durch bekannte Methoden der Flüssig-/fest-Trennung aus der Polymerlösung entfernt werden.

Nach bevorzugten Verfahrensweisen wird das gesamte in der Reaktionsmischung enthaltene Wasser durch thermische Trennverfahren entfernt und es werden die wäßrige Phase überwiegend durch bekannte mechanische Verfahren der Flüssig-/flüssig-Trennung abgetrennt und die verbleibenden Wasserreste durch thermische Trennverfahren entfernt und die gebildeten festen Anteile durch Methoden der Flüssig-/fest-Trennung aus der Polymerlösung abgetrennt.

Unter hochmolekularen Polyphenylenethern werden die durch oxidative Kupplung von 2,6-Dialkylphenol zu einer Kette alkylsubstituierter, in para-Stellung durch Sauerstoffatome etherartig gebundene Benzolringe verstanden. Die erfindungsgemäßen Polymeren weisen Durchschnittsmolekulargewichte aus dem Zahlenmittel ($\overline{M}_n$) von 23 000 bis 40 000, bevorzugt 25 000 bis 30 000, bestimmt nach der in »Macromolecular Synthesis« 1 (1978), Seite 83 abgegebenen Methode, auf. Hochmolekulare Polyphenylenether, auch Poly(phenylenoxide) genannt, sind an sich aus der Literatur seit längerem bekannt (vgl. z. B. US-A-3 661 848; US-A-3 219 625 oder US-A-3 378 505), so daß sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Akylsubstituenten aufweisen, sind die üblichen Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 15 bis 50°C warme Lösung des Monomeren in Gegenwart eines Katalysatorkomplexes eingeleitet. Die Sauerstoffdurchflußgeschwindigkeit ist im wesentlichen die gleiche, wie sie in US-A-3 306 874 und 3 306 875 beschrieben ist. Nach den bevorzugt erfindungsgemäßen Verfahren wird der Katalysator aus Kupfersalz, vorzugsweise Kupfer-I-Bromid, Amin und 0,01 bis 5 Gew.-% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z. B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-Bromid, Kupfer-I-Chlorid, Kupfer-II-Chlorid, Kupfer-I-Iodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1 : 1 bis 20 : 1, d. h. maximal bis zu einem Überschuß des 20fachen am Lösungsmittel, bezogen auf das Monomere.

Als Lösungsmittel werden Benzol, Toluol, Ethylbenzol und aliphatische Kohlenwasserstoffe, vorzugsweise $C_6$- bis $C_{10}$-Kohlenwasserstoffe, verwendet.

Darüber hinaus kann die Reaktionsmischung einen Aktivator, wie ein Diarylguanidin oder ein Diarylformamidin enthalten (vgl. US-A-3 544 515).

Die Polykondensationsreaktion wird bei Temperaturen zwischen 15 und 50, vorzugsweise 18 und 22° C durchgeführt. Hierzu wird der Sauerstoff in die 18 bis 22° C warme Lösung des Monomeren in Gegenwart des Aminkomplexes eingeleitet. Die Reaktion ist in kurzer Zeit beendet, d. h. das Katalysatorgemisch wird in 0,1 bis 1,5 Stunden in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.-% Polyphenylenether, 0,005 bis 1,5 Gew.-% Metallionen und etwa 0,1 bis 6,0 Gew.-% Amin sowie gegebenenfalls geringe Mengen anderer Materialien. Werden diese Reaktionsmischungen zur Inaktivierung des Katalysatorsystems mit chelatkomplexbildenden Substanzen aus beispielsweise der Klasse der Polyaminopolycarbonsäuren, der Organophosphorsäuren, Mercaptoverbindungen etc. behandelt, so ist das Verteilungsgewicht des gebildeten Metallchelatkomplexes regelmäßig zugunsten der aus der oxidativen Kupplung inhärent vorhandenen wäßrigen Phase verschoben. Es ist gegebenenfalls von Vorteil, in Gegenwart eines Phasentransferkatalysators, wie z. B. Kronenether, zu arbeiten.

Es bietet sich nun die Möglichkeit, den gebildeten Metallchelatkomplex mit der wäßrigen Phase durch bekannte Methoden der Flüssig-/flüssig-Separation, beispielsweise Zentrifugieren von der Polymerlösung zu trennen. Häufig lassen sich damit jedoch nur ungenügende Trennergebnisse erzielen, da entweder ein Restanteil feinstverteilter, nur mit unwirtschaftlich hohem Aufwand abscheidbarer, Cu-haltiger wäßriger Phase in der Polymerlösung verbleibt oder weil eine Emulgierung zurückführende Zwischenschichtbildung eine vollständige Phasen-Trennung unmöglich macht.

Es wurde nun überraschend gefunden, daß eine thermische, d. h. destillative Abtrennung des nach der Inaktivierung des Cu-Aminkomplexes in der Reaktionsmischung vorhandenen Wassers zu einem gleichzeitigen Ausscheiden fester, metallkomplexhaltiger Anteile in solch einem Maße führt, daß damit nach einfacher Fest-/flüssig-Trennung, z. B. Filtration oder Zentrifugieren, Metall-Restkonzentrationen in der Polymerenlösung erhalten werden, die mit bekannten Methoden der mechanischen Flüssig-/flüssig-Trennung nicht oder nur mit unwirtschaftlich hohem Aufwand erreichbar sind.

Die Abtrennung der bei der oxidativen Kupplung von Alkylphenolen zu Polyphenylenethern entstehenden wäßrigen Phase ist mehrfach in der Literatur beschrieben. So sind z. B. nach DE-B-1 595 755 Molekularsiebe geeignet, Wasser während der Kupplungsreaktion zu entfernen. Zweck dieser Maßnahme ist jedoch in diesen Fällen, die Verhinderung der Inaktivierung des metallhaltigen Katalysators durch Hydrolyse und damit Störung der Katalysatorwirksamkeit, bzw. der Oxidationsreaktion durch Wasseranreicherung.

Im Gegensatz hierzu zielt die erfindungsgemäße Eliminierung wäßriger Anteile auf die damit gleichzeitig bewirkte Abscheidung von metallhaltigen Katalysatoranteilen nach deren Inaktivierung durch beispielsweise Metallchelat-Bildung nach Reaktionsende.

Erfindungsgemäß wird die durch Chelatkomplexbildung des metallhaltigen Katalysators inaktivierte, ggf. mit Stabilisatoren und Entfärbungsmitteln versetzte Reaktionsmischung mit oder ohne vorheriger mechanischer Abtrennung einer vorhandenen wäßrigen Phase einer destillativen Behandlung im Vakuum, bei Normal- oder Überdruck unterworfen, so daß gerade alle wäßrigen Anteile über Kopf entfernt werden. Die sich dabei im Sumpfprodukt neben der Polymerenlösung ausscheidenden festen Anteile, insbesondere Verbindungen des Metallions des Katalysators, können dann durch bekannte Methoden der Flüssig/fest-Trennung, z. B. durch Filtrieren, Zentrifugieren etc. leicht abgetrennt werden. Das oben angeführte Problem der Wertproduktverluste-verursachenden Emulsionsbildung in Anwesenheit einer wäßrigen Phase entfällt dabei.

Da viele der bei der Herstellung von Polyphenylenethern geeigneten Lösungsmittel azeotrope Gemische mit Wasser bilden und häufig mit dem letzeren nach Kondensation eine begrenzte Mischbarkeit besitzen, kann die erfindungsgemäße thermische Wasserabtrennung vorteilhaft gleichzeitig eine die später sowieso erforderliche Lösungsmittelabtrennung zur Gewinnung des Polymeren unterstützenden Maßnahme sein.

Nach der Entfernung der metallischen Komponente als Komplex kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z. B. der Polyphenylenether durch Ausfällen aus einer Reaktionslösung mittels einem Antilösungsmittel, wie beispielsweise einem Überschuß von einem Alkohol, z. B. Methanol, isoliert werden. Das filtrierte Produkt kann im Alkohol aufgeschlämmt und — falls gewünscht — mit einem Entfärbungsmittel gerührt werden. Der Polyphenylenether wird dann abfiltriert und nach herkömmlichen Verfahren in Filme, Fasern, ausgeformte Gegenstände u. dgl. umgewandelt. Andere Alkohole wie Isopropanol, Propanol oder Ethanol können ebenfalls verwendet werden.

Die Aminkomponente des Katalysators kann durch Destillation oder nach anderen herkömmlichen Verfahren zurückgewonnen werden.

Wie bereits erwähnt, ist ein bevorzugter Aspekt des vorliegenden Verfahrens die Herstellung von Polyphenylenetherlösungen mit niedrigem Metallgehalt, aus denen die polymeren Stoffe nach sog. Totalisolationsverfahren, z. B. durch Sprühtrocknung, Dampfausfällung und Heißwasserzerkrümelung, gewonnen werden können. Dies erleichtert die wirtschaftliche Anwendung solcher Verfahren, die hinsichtlich der erforderlichen Energie, der Lösungsmittelverluste u. dgl. wirtschaftlicher sind als die bekannten Ausfällungsverfahren.

Die mit der Erfindung erzielten Vorteile bestehen insbesondere darin, daß mit Hilfe der thermischen Wasserabtrennung nach der Behandlung mit Chelatkomplexbildnern die Metallkatalysatorreste in den Polyphenylenethern erheblich reduziert werden können. Die resultierenden Polyphenylenether zeichnen sich durch eine verbesserte Farb- und Oxidationsstabilität bei der Verarbeitung im Temperaturbereich über 250° C aus. Die Abtrennung der Metallkatalysatoren nach dem erfindungsgemäßen Verfahren ist einfach und erfolgt zumeist in einem Schritt. Dabei können niedrig- und relativ hochkonzentrierte Polyphenyloxid-Reaktionslösungen (bis zu 25 Gew.-%) ohne Probleme behandelt werden.

In den folgenden Beispielen sind die angegebenen Teile Gewichtsteile, es sei denn, es ist anders angegeben.

Die Intrinsviskosität wird durch Messung an 0,5%igen Lösungen in Chloroform bei 30° C bestimmt.

## Beispiele

### Herstellung von Poly-(2,6-dimethyl-1,4-phenylen)-ether

Eine Vorlage von 1,3 g Cu-I-Bromid und 20 g 1,4-Dimethylpentylamin und 2 g 2,6-Dimethylphenol (= DMP) wird bei 20° C 5 Minuten unter Einleiten von Sauerstoff gerührt, und dann wird im Verlauf von 30 Minuten in eine Lösung von 204 g DMP in 1400 ml Toluol eindosiert. Anschließend wird noch 1 Stunde bei 20° C gerührt. Die Reaktion wird in Gegenwart von 30 Liter Sauerstoff pro Stunde durchgeführt.

Abtrennung des Metallions aus der polyphenylenetherhaltigen Reaktionsmischung.

Einer bei Reaktionsende ca. 0,40 g Cu/kg enthaltenden polyphenylenetherhaltigen toluolischen Reaktionsmischung wurden unter kräftigem Rühren die der 1,1fachen molaren Menge des in der Reaktionsmischung enthaltenden Kupfers entsprechende Menge des Na$_3$-Salzes der Ethylendiamintetraessigsäure (Na$_3$-EDTA) in ca. 50 g Wasser/kg Reaktionslösung zugesetzt.

Die Mischung von Reaktionslösung und komplexbildendem Polyaminopolycarbonsäuresalz wurde unter kräftigem Rühren 45 min. bei 75° C gehalten. Danach wurde der vorgenannte Ansatz geteilt. Ein im nachfolgenden als Probe A bezeichneter Teil wurde in einer Zentrifuge zur Trennung von öliger und wäßriger Phase behandelt. Die in der öligen, polymerhaltigen Phase der Probe A gemessene Kupferkonzentration betrug 29 mg/kg. Der weitere Teil B der Reaktionsmischung wurde im Scheidetrichter grob von der wäßrigen Phase getrennt und anschließend die überstehende Phase bei 75° C im Vakuum solange über kopf abgetrieben, bis ein wasserfreies Destillat erhalten wurde, was spätestens nach 15 bis 20% Destillat, bezogen auf die eingesetzte Mischung, der Fall war. Das Blasenprodukt wurde anschließend heiß über eine Filterschicht (Fabrikat Seitz) druckfiltriert. Die Kupferkonzentration der Polymerenlösung der Probe B betrug 1 mg Cu/kg.

## Patentansprüche

1. Verfahren zur Entfernung des Katalysators bei der Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplung mit Sauerstoff oder sauerstoffhaltigen Gasmischungen bei Temperaturen zwischen 15 und 50° C in Anwesenheit eines Katalysatorkomplexes aus einem Kupfersalz und einem organischen Amin in Gegenwart eines Lösungsmittels im Bereich von 1 : 1 bis 20 : 1 Gewichtsteilen, bezogen auf das Monomere Phenol, und Inaktivierung des kupferhaltigen Katalysatorkomplexes bei Ende der oxidativen Kupplungsreaktion durch in Kontakt bringen mit chelatkomplexbildenden Substanzen in Gegenwart eines wäßrigen Mediums sowie Abtrennung der in der wäßrigen Phase löslichen Metallchelatkomplexe und anderer wasserlöslicher Bestandteile, dadurch gekennzeichnet, daß in der Reaktionsmischung enthaltenes Wasser durch thermische Trennverfahren abgetrennt und die aus der Reaktionsmischung sich ausscheidenden festen Anteile durch bekannte Methoden der Flüssig-/fest-Trennung aus der Polymerlösung entfernt werden.

2. Verfahren nach Anspruch 1, dadurch gekennzeichnet, daß das gesamte in der Reaktionsmischung enthaltene Wasser durch thermische Trennverfahren entfernt wird.

3. Verfahren nach Anspruch 1, dadurch gekennzeichnet, daß die wäßrige Phase überwiegend durch bekannte mechanische Verfahren der Flüssig-/flüssig-Trennung abgetrennt wird und die verbleibenden Wasserreste durch thermische Trennverfahren entfernt und die gebildeten festen Anteile durch Methoden der Flüssig-/fest-Trennung aus der Polymerlösung abgetrennt werden.

## Claims

1. A process for the removal of the catalyst in the production of high molecular weight polyphenylene ethers from monohydric phenols having alkyl substituents in the two ortho-positions and possibly in the meta-position, but not in the para-position, by oxidative coupling with oxygen or an oxygen-containing gas mixture at from 15 to 50°C in the presence of a catalyst complex of a copper salt and an organic amine in the presence of 1 to 20 parts by weight of solvent per part by weight of the monomer phenol; inactivating the copper-containing catalyst complex at the end of the oxidative coupling reaction by bringing it into contact with a chelate-complex-forming substance on the presence of an aqueous medium; and separating off the metal chelate complexes which are soluble in the aqueous phase, as well as other water-soluble constituents, wherein water contained in the reaction mixture is removed by a thermal separation method, and the solid constituents precipitating from the reaction mixture are removed from the polymer solution by a conventional method of separating liquid and solid phases.

2. A process as claimed in claim 1, wherein all the water contained in the reaction mixture is removed by a thermal separation method.

3. A process as claimed in claim 1, wherein the aqueous phase is for the most part removed by a conventional method of mechanically separating two different liquid phases, the residual water is removed by a thermal separation method, and the solid constituents formed are separated from the polymer solution by a method of separating liquid and solid phases.

## Revendications

1. Procédé pour l'élimination du catalyseur lors de la préparation de poly(éthers de phénylène) à poids moléculaire élevé à partir de phénols mono-valents, qui portent des substituants alkyle sur les deux positions ortho et éventuellement en position méta, mais non en position para, par une copulation oxydante avec l'oxygène ou des mélanges gazeux contenant de l'oxygène, à des températures comprises entre 15 et 50°C en présence d'un complexe catalytique constitué d'un sel de cuivre et d'une amine organique et en présence d'un solvant dans une proportion de 1 : 1 à 20 : 1 parties en poids par rapport au phénol monomère, le complexe catalytique au cuivre étant inactivé à la fin de la réaction de copulation oxydante en le mettant en contact, dans un milieu aqueux, avec des substances formant des complexes chélatés, puis les complexes métalliques chélatés solubles dans la phase aqueuse et d'autres ingrédients solubles dans la phase aqueuse sont séparés, caractérisé en ce que l'eau contenue dans le mélange réactionnel est éliminée par un procédé de séparation thermique et les fractions solides, qui se séparent de la solution du polymère par précipitation, sont éliminées par une technique connue de séparation liquide-solide.

2. Procédé suivant la revendication 1, caractérisé en ce que la totalité de l'eau présente dans la mélange réactionnel est éliminée par un procédé de séparation thermique.

3. Procédé suivant la revendication 1, caractérisé en ce que la fraction principale de la phase aqueuse est séparée par une technique mécanique de séparation liquide-liquide et la fraction résiduelle par un procédé de séparation thermique, les fractions solides formées étant séparées de la solution du polymère par une technique de séparation liquide-solide.